# EUROPEAN PATENT APPLICATION

(11) **EP 4 811 766 A1**
(43) Date of publication of application: **23.09.2026**
(21) Application number: 26164991.7
(22) Date of filing: 16.03.2026
(51) Int. Cl.: H04N 7/18, H04N 21/235

(54) **STREAM-LEVEL VIDEO ANALYTICS TAILORED FOR DIFFERENT USERS OF A VIDEO SURVEILANCE CAMERA**

(30) Priority: 17.03.2025 IN 202511023424
(71) Applicant: Honeywell International Inc., Charlotte, NC 28202 (US)
(72) Inventor: CHAURASIA, Jitendra S., Charlotte, 28202 (US); GUPTA, Anchal, Charlotte, 28202 (US); S K, Pramod Krishna, Charlotte, 28202 (US); BENNY, Libin, Charlotte, 28202 (US)
(74) Representative: Haseltine Lake Kempner LLP

(57) **Abstract**

Methods, video cameras, systems, and stored instruction sets for video cameras and systems. A video camera captures a raw video stream. The camera or a separate device processes the raw video stream to produce a first processed video stream, including applying a first video analytics algorithm resulting in the first processed video stream having first video analytics algorithm results. The camera or the separate device also processes the raw video stream to produce a second processed video stream, including applying a second video analytics algorithm resulting in the second processed video stream having second video analytics algorithm results, wherein the second video analytics algorithm is different from the first video analytics algorithm. The first stream and first results are provided to a first user and not a second user, while the second stream and second results are provided to a second user and not the first user.

## Description

### BACKGROUND

Traditionally, camera events or alerts are broadcasted to all users connected to a camera system, leading to a high volume of irrelevant notifications and potential security risks. When a camera is connected to multiple Network Video Recorder (NVR) client systems, these alerts are distributed indiscriminately. This can result in alert fatigue and critical events being overlooked. There is a need for a system that delivers personalized alerts to individual user or user classes based on their specific needs.

### OVERVIEW

The present inventors have recognized a need for new and alternative systems and methods for delivering video stream data to different individual users or user classes.

An illustrative and non-limiting example takes the form of a method for monitoring a Field of View (FOV) captured by a video camera, the method comprising: the video camera capturing a raw video stream of the Field of View (FOV) of the video camera; processing the raw video stream to produce a first processed video stream, including applying a first video analytics algorithm resulting in the first processed video stream having first video analytics algorithm results; processing the raw video stream to produce a second processed video stream, including applying a second video analytics algorithm resulting in the second processed video stream having second video analytics algorithm results, wherein the second video analytics algorithm is different from the first video analytics algorithm; granting a first user access rights to the first processed video stream but not to the second processed video stream; granting a second user access rights to the second processed video stream but not to the first processed video stream; allowing the first user to display the first processed video stream on a first user display in accordance with the first user access rights granted to the first user, while preventing the first user from displaying the second processed video stream; and allowing the second user to display the second processed video stream on a second user display in accordance with the second user access rights granted to the second user, while preventing the second user from displaying the first processed video stream.

Additionally or alternatively, the method also includes processing the raw video stream to produce a third processed video stream, including applying the first video analytics algorithm and the second video analytics algorithm, resulting in a third processed video stream that incudes first video analytics algorithm results and second video analytics results; granting a third user access rights to the third processed video stream; and allowing the third user to display the third processed video stream on a third user display in accordance with the third user access rights granted to the third user. Additionally or alternatively, the third processed video stream is encrypted while the first processed video stream and the second processed video stream are not encrypted.

Additionally or alternatively, the first processed video stream is encoded with a first set of codec parameter values, and the second processed video stream is encoded with a second set of codec parameter values, wherein the second set of codec parameter values is not identical to the first set of codec parameter values.

Additionally or alternatively, wherein the first set of codec parameter values includes a first Frame Per Second (FPS) parameter value, a first Bitrate parameter value and a first Resolution parameter value, and the second set of codec parameter values include a second Frame Per Second (FPS) parameter value, a second Bitrate parameter value and a second Resolution parameter value.

Additionally or alternatively, the first processed video stream includes first metadata, wherein at least part of the first video analytics algorithm results is expressed in the first metadata; and the second processed video stream includes second metadata, wherein at least part of the second video analytics algorithm results is expressed in the second metadata.

Additionally or alternatively, the first video analytics algorithm and/or the second video analytics algorithm includes one of: a facial recognition video analytics algorithm; an asset movement video analytics algorithm; a people count video analytics algorithm; a crowd detection video analytics algorithm; a loitering detection video analytics algorithm; an intrusion detection video analytics algorithm; a queue length video analytics algorithm; an unidentified object detection video analytics algorithm; an occupancy detection video analytics algorithm; a vehicle detection video analytics algorithm; a vehicle count video analytics algorithm; a license plate reader video analytics algorithm.

Additionally or alternatively, the video camera is configured to: process the raw video stream to produce the first processed video stream, including applying the first video analytics algorithm resulting in the first processed video stream having first video analytics algorithm results; and process the raw video stream to produce the second processed video stream, including applying the second video analytics algorithm resulting in the second processed video stream having second video analytics algorithm results, wherein the second video analytics algorithm is different from the first video analytics algorithm.

Additionally or alternatively, the video camera is configured to store the first user access rights and the second user access rights, and to: allow the first user access to the first processed video stream in accordance with the first user access rights granted to the first user, while preventing access of the first user to the second processed video stream; allow second user access to the second processed video stream in accordance with the second user access rights granted to the second user, while preventing access of the second user to the first processed video stream.

Additionally or alternatively, a remote device operatively coupled to the video camera is configured to store the first user access rights and the second user access rights, and to: allow the first user access to the first processed video stream in accordance with the first user access rights granted to the first user, while preventing access of the first user to the second processed video stream; and allow the second user access to the second processed video stream in accordance with the second user access rights granted to the second user, while preventing access of the second user to the first processed video stream.

Additionally or alternatively, one or more of the first video analytics algorithm results and the second video analytics algorithm results encode one or more user alerts for alerting to a detected condition or event. Additionally or alternatively, one or more of the user alerts include a boundary box that is superimposed on the detected condition or event detected in the respective processed video stream. Additionally or alternatively, one or more of the user alerts include an audible alert and/or a text-based alert. Additionally or alternatively, one or more of the user alerts are customized to a respective user.

Additionally or alternatively, the first user display is part of one of: a mobile device of the first user; and an operator console in which the first user is currently logged in.

Another illustrative and non-limiting example takes the form of a video camera configurdd for capturing a raw video stream of a Field of View (FOV) of the video camera, the video camera comprising: an image capture device having the FOV and configured to capture the raw video stream; a memory for storing first user access rights of a first user and second user access rights of a second user; a controller operatively coupled to the memory, the controller configured to: process the raw video stream to produce a first processed video stream, including applying a first video analytics algorithm resulting in the first processed video stream having first video analytics algorithm results; process the raw video stream to produce a second processed video stream, including applying a second video analytics algorithm resulting in the second processed video stream having second video analytics algorithm results, wherein the second video analytics algorithm is different from the first video analytics algorithm; allow the first user to access the first processed video stream based on the first user access rights of the first user, while preventing the first user from accessing the second processed video stream; and allow the second user access to the second processed video stream based on the second user access rights of the second user, while preventing the second user from accessing the first processed video stream.

Additionally or alternatively, the memory stores third user access rights of a third user, and the controller is configured to: process the raw video stream to produce a third processed video stream, including applying the first video analytics algorithm and the second video analytics algorithm, resulting in a third processed video stream that incudes first video analytics algorithm results and second video analytics results; and allow the third user to access the third processed video stream based on the third user access rights of the third user.

Additionally or alternatively, the controller is configured to encrypt the third processed video stream, while not encrypting the first processed video stream and the second processed video stream.

Additionally or alternatively, the first processed video stream is encoded with a first set of codec parameter values, and the second processed video stream is encoded with a second set of codec parameter values, wherein the second set of codec parameter values is not identical to the first set of codec parameter values.

Another illustrative and non-limiting example takes the form of a non-transitory computer readable medium storing instructions that when executed by one or more processors of a video camera cause the one or more processors to: process a video stream captured by the video camera to produce a first processed video stream, including applying a first video analytics algorithm resulting in the first processed video stream having first video analytics algorithm results; process the video stream to produce a second processed video stream, including applying a second video analytics algorithm resulting in the second processed video stream having second video analytics algorithm results, wherein the second video analytics algorithm is different from the first video analytics algorithm; allow a first user access the first processed video stream, while preventing the first user from accessing the second processed video stream; and allow a second user access to the second processed video stream, while preventing the second user from accessing the first processed video stream.

This overview is intended to introduce the subject matter of the present patent application. It is not intended to provide an exclusive or exhaustive explanation. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
Figure 1 shows an illustrative system;
Figure 2 shows illustrative controls for video streams;
Figure 3 shows an illustrative set of parameters that can be selected for or by a user;
Figure 4 illustrates use of a master node in a video system;
Figure 5 shows a method in block form; and
Figures 6-7 show illustrative system configurations.

### DETAILED DESCRIPTION

The presently disclosed systems and methods may provide a number of useful features to users and entities. Some illustrative examples include the following:
In an example, a system provides personalized camera alerts and event monitoring of a video stream from a video surveillance camera. Such a system allows users to configure and receive alerts for specific events in a video stream, such that these alerts are private and only visible to the configuring user (or similar user class). The alerts may be delivered securely and promptly (e.g. in real-time or near real-time).

In another example, advanced security and personalization for the end user is provided by introducing control over each video stream from a video surveillance camera, sometimes with AI capabilities to assist the end user in configuration and smart experience.

Some examples include AI capable software to ensure only certain information and or alerts are passed to each user depending on the need and severity, and/or depending on user preference, request, and/or authorization.

In some examples, certain high-risk video analytics are not exposed to all users, but rather are only available to authorized users. This can decrease the threat to security in critical surroundings like banks, museums, jails, defense areas etc. The analytics that are to be withheld from unauthorized users may be predefined for a particular system and/or may be identified using a priori rules, image recognition features (such as identifying blood, nudity, etc.) or the like.

Some examples customize alerts based on each user's history and behavior patterns. For example, if the user tends to respond quickly to alerts about specific events, the system may prioritize those alerts for the user.

A range of use cases may be realized. The present invention may be used in buildings, building management, campuses (multiple buildings, areas or structures), for example. Users may include any of mobile users, security operators, administrators and/or executives. Different user classes may be defined, for example:
- An administrator or executive may have the option to view all video analytic results, while specific security operators may only have access to certain video analytics results.
- An administrator or executive may monitor an operator's work in monitoring and addressing ongoing security challenges, without compromising existing stream functionality.
These and/or other user classes may be defined. Some examples allow individual users to select and modify options with respect to viewing of video analytic results, and further some examples obtain credentials or other authorization information from individual users before providing access to video analytic results of select types. Credential-related or authorization-related limitations may include limiting analytic outcomes from being observed, or may limit access to raw or processed video itself. For example, privacy concerns may limit access to those having authorization to view individually identifiable traits or information in a medical setting, or may limit access to certain camera views or the like in other settings such as police, military and/or other secured settings.

Some examples may be configured for use by Military, Police OR local administrative agencies. These agencies often will be using a mobile app, and they can have an option to configure specific video analytic and/or setting based on their requirement. For example, a military officer can configure specific alerts based on his needs. Some of these alerts may not be available to lower level security operators based on credentials or authorization. Any security event can be dispatched to only selected video streams of the video camera.

Some examples offer advantages for Generic integration through an Application Programming Interface (API). For example, many hospitals and high life risk centers have their own security systems. Using API calls, specific sensitive events and alerts may be made available to certain identified surveillance operators while not being available to generic surveillance operators. The customer (system owner / person or entity controlling a facility or video system) can configure these parameters based on their requirements to achieve a custom result.

In another example, for transportation centers such as airports or railways, stream level settings or security alarms may be configured based on specific terminals or stations. In one example, alerts related to a VIP Route or other specific event may be made available to only certain surveillance operators with a need to know, while other surveillance operators may not be given access to these alerts. User categories and/or authorizations can be used here as well. For example, in an airport, several competing companies may operate airlines, and so users associated with one airline may have access limited to that airline's activities, preventing one company from spying on another's activities, capabilities, etc. However there may be some within a given airline who, for security or operational reasons, are provided with broader access based on the individual user's security clearance.

In some examples, the live feed from a video stream of a video camera, along with specific video analytic alerts, can provide significant benefit to airport, railway, malls, casino, stadium, and other crowd management authorities in enhancing security, operational efficiency, and passenger experience. This management of live feeds may provide enhanced security and safety. For example, with specific stream monitoring, continuous live feeds allow security personnel to monitor various areas of a terminal of an airport/railways or other area in real time, ensuring prompt detection of suspicious activities with restricted access for some live stream on a need to know basis to help reduce information leak. In another example, the live feed also facilitates immediate response to identified events or potential risks; that is, instant video analytic alerts triggered by unusual movements, breaches or other activities enable security teams to respond quickly to potential threats, reducing the risk of incidents.

Some examples offer improved operational efficiency. This may be through, for example, improved resource allocation. Real-time video feeds help in efficiently allocating security and maintenance staff to areas where they are most needed by configuring area specific video streams. Also, the computational load will be less as it may be unnecessary to access as many feeds and/or make as many requests to focus on the desired information.

In examples, multi-stream IP video cameras can transmit multiple video streams using different Codec parameters (e.g. Frame Per Second (FPS), Bitrate, Resolution) simultaneously. Different video analytics algorithms may be applied to different ones of the multiple video streams. The Codec parameters may be changed in real time for a particular video stream based on events detected by the corresponding video analytics algorithms. This may allow for high accuracy rate recording for subsequent detailed analysis.

The system thus provides enhanced flexibility and customization. For example, different video streams can be configured for various purposes. For example, an IO [Input and Output] option may be provided that allows additional tailored video stream to be configured and made available to certain security operators based on the security need of the facility. The multi-stream cameras can adjust the quality of the multiple video stream based on network conditions (bandwidth, traffic, etc.), helping to ensure continuous monitoring even with limited bandwidth.

The system also provides, in examples, improved monitoring and analysis. For example, security personnel can have choice-based viewing of multiple streams from a single camera simultaneously, providing comprehensive coverage of an area without needing multiple cameras. Further, multi-stream cameras can feed different streams into different video analytics algorithms, enabling advanced functionalities like facial recognition, motion detection, and license plate recognition in real-time for specific streams. In some cases, the different streams may then be made available to certain security operators.

Some examples also provide enhanced security and redundancy. For example, if one stream fails, the other streams can still provide critical video data, ensuring continuous surveillance. In some cases, the video camera can restart a failed stream without affecting the other streams. Moreover, multiple streams can be recorded and stored in different locations or formats, providing a backup in case of data loss or corruption.

Examples offer enhanced compliance and reporting. Multi-stream cameras can help meet various regulatory requirements by providing high-quality recorded footage using different analytics for evidence while using lower-quality streams for day-to-day monitoring. For example, in an airport setting, multi-stream IP cameras can be configured to provide different video analytics on the various streams. For example, one stream may be proceed using a face recognition video analytic algorithm, while another stream may be processed using an abandon bag detection video analytic algorithm. Different security operators may be subscribed to different video streams. In another example, for crowd gathering video analytics, lower-resolution streams can be used, while for face recognition video analytics, higher-resolution streams can be used. In an example, personalized stream configurations can adapt the quality of the stream based on the user's internet connection, ensuring smooth playback without buffering. Further, data processing resources can be allocated dynamically based on the priority and importance of the stream, ensuring critical data is processed efficiently. In addition, personalized configurations allow for detailed tracking of behavior and preferences of security operators, providing valuable insights for improving services and content.

In some instances, a method for monitoring a Field of View (FOV) captured by a video camera includes the video camera capturing a raw video stream of the Field of View (FOV) of the video camera and then processing the raw video stream to produce a first processed video stream, including applying a first video analytics algorithm resulting in the first processed video stream having first video analytics algorithm results. The raw video stream may be processed to produce a second processed video stream, including applying a second video analytics algorithm resulting in the second processed video stream having second video analytics algorithm results, wherein the second video analytics algorithm is different from the first video analytics algorithm. A first user is granted access rights to the first processed video stream but not to the second processed video stream. A second user is granted access rights to the second processed video stream but not to the first processed video stream. The first user is allowed to display the first processed video stream on a first user display in accordance with the first user access rights granted to the first user, but is not allowed to display the second processed video stream. The second user is allowed to display the second processed video stream on a second user display in accordance with the second user access rights granted to the second user, but is not allowed to display the first processed video stream.

In some cases, the raw video stream may be processed to produce a third processed video stream, including applying the first video analytics algorithm and the second video analytics algorithm, resulting in a third processed video stream that incudes first video analytics algorithm results and second video analytics results. A third user may be granted access rights to the third processed video stream and the third user may be allowed to display the third processed video stream on a third user display in accordance with the third user access rights granted to the third user. In some cases, the third processed video stream may be encrypted while the first processed video stream and the second processed video stream are not encrypted, for example.

In some cases, the first processed video stream may be encoded with a first set of codec parameter values, and the second processed video stream may be encoded with a second set of codec parameter values, wherein the second set of codec parameter values is not identical to the first set of codec parameter values. In some cases, the first set of codec parameter values may include a first Frame Per Second (FPS) parameter value, a first Bitrate parameter value and a first Resolution parameter value, and the second set of codec parameter values may include a second Frame Per Second (FPS) parameter value, a second Bitrate parameter value and a second Resolution parameter value. In some cases, the first processed video stream may include first metadata, and at least part of the first video analytics algorithm results may be expressed in the first metadata. In some cases, the second processed video stream may include second metadata, wherein at least part of the second video analytics algorithm results is expressed in the second metadata.

In some cases, the first video analytics algorithm may include one of a facial recognition video analytics algorithm, an asset movement video analytics algorithm, a people count video analytics algorithm, a crowd detection video analytics algorithm, a loitering detection video analytics algorithm, an intrusion detection video analytics algorithm, a queue length video analytics algorithm, an unidentified object detection video analytics algorithm, an occupancy detection video analytics algorithm, a vehicle detection video analytics algorithm, a vehicle count video analytics algorithm, or a license plate reader video analytics algorithm. In some cases, the second video analytics algorithm may include one of a facial recognition video analytics algorithm, an asset movement video analytics algorithm, a people count video analytics algorithm, a crowd detection video analytics algorithm, a loitering detection video analytics algorithm, an intrusion detection video analytics algorithm, a queue length video analytics algorithm, an unidentified object detection video analytics algorithm, an occupancy detection video analytics algorithm, a vehicle detection video analytics algorithm, a vehicle count video analytics algorithm, or a license plate reader video analytics algorithm.

In some cases, the video camera may be configured to process the raw video stream to produce the first processed video stream, including applying the first video analytics algorithm resulting in the first processed video stream having first video analytics algorithm results. In some cases, the video camera may be configured to process the raw video stream to produce the second processed video stream, including applying the second video analytics algorithm resulting in the second processed video stream having second video analytics algorithm results, wherein the second video analytics algorithm is different from the first video analytics algorithm. In some cases, the video camera may be configured to store the first user access rights and the second user access rights. The video camera may be configured to allow the first user access to the first processed video stream in accordance with the first user access rights granted to the first user, while preventing access of the first user to the second processed video stream. The video camera may be configured to allow the second user access to the second processed video stream in accordance with the second user access rights granted to the second user, while preventing access of the second user to the first processed video stream.

In some cases, a remote device operatively coupled to the video camera may be configured to store the first user access rights and the second user access rights. In some cases, the remote device may be configured to allow the first user access to the first processed video stream in accordance with the first user access rights granted to the first user, while preventing access of the first user to the second processed video stream. In some cases, the remote device may be configured to allow the second user access to the second processed video stream in accordance with the second user access rights granted to the second user, while preventing access of the second user to the first processed video stream.

In some cases, one or more of the first video analytics algorithm results and the second video analytics algorithm results may encode one or more user alerts for alerting to a detected condition or event. In some cases, one or more of the user alerts may include a boundary box that is superimposed on the detected condition or event detected in the respective processed video stream. In some cases, one or more of the user alerts may include an audible alert and/or a text-based alert. In some cases, one or more of the user alerts may be customized to a respective user. In some cases, the first user display may be part of one of a mobile device of the first user and an operator console in which the first user is currently logged in.

In some instances, a video camera captures a raw video stream of a Field of View (FOV) of the video camera. The video camera includes a memory for storing first user access rights of a first user and second user access rights of a second user, and a controller that is operatively coupled to the memory. The controller is configured to process the raw video stream to produce a first processed video stream, including applying a first video analytics algorithm resulting in the first processed video stream having first video analytics algorithm results. The controller is configured to process the raw video stream to produce a second processed video stream, including applying a second video analytics algorithm resulting in the second processed video stream having second video analytics algorithm results, wherein the second video analytics algorithm is different from the first video analytics algorithm. The controller is configured to allow the first user to access the first processed video stream based on the first user access rights of the first user, while preventing the first user from accessing the second processed video stream. The controller is configured to allow the second user access to the second processed video stream based on the second user access rights of the second user, while preventing the second user from accessing the first processed video stream.

In some cases, the memory may store third user access rights of a third user. The controller may be configured to process the raw video stream to produce a third processed video stream, including applying the first video analytics algorithm and the second video analytics algorithm, resulting in a third processed video stream that incudes first video analytics algorithm results and second video analytics results, and to allow the third user to access the third processed video stream based on the third user access rights of the third user. In some cases, the controller may be configured to encrypt the third processed video stream, while not encrypting the first processed video stream and the second processed video stream. In some cases, the first processed video stream may be encoded with a first set of codec parameter values, and the second processed video stream may be encoded with a second set of codec parameter values, wherein the second set of codec parameter values is not identical to the first set of codec parameter values.

In some instances, instructions may be stored on a non-transitory, computer-readable storage medium. When the instructions are executed by one or more processors, the one or more processors are caused to process a video stream captured by the video camera to produce a first processed video stream, including applying a first video analytics algorithm resulting in the first processed video stream having first video analytics algorithm results. The one or more processors are caused to process the video stream to produce a second processed video stream, including applying a second video analytics algorithm resulting in the second processed video stream having second video analytics algorithm results, wherein the second video analytics algorithm is different from the first video analytics algorithm. The one or more processors are caused to allow a first user access the first processed video stream, while preventing the first user from accessing the second processed video stream. The one or more processors are caused to allow a second user access to the second processed video stream, while preventing the second user from accessing the first processed video stream.

The processor or controller may take many forms, including, for example, a microcontroller or microprocessor, coupled to a memory storing readable instructions for performing methods as described herein, as well as providing configuration of the controller for the various examples that follow. The controller may include one more application-specific integrated circuits (ASIC) to provide additional or specialized functionality, such as, without limitation a signal processing ASIC that can filter received signals from one or more sensors using digital filtering techniques. Logic circuitry, state machines, and discrete or integrated circuit components may be included as well. The skilled person will recognize many different hardware implementations are available for a controller.

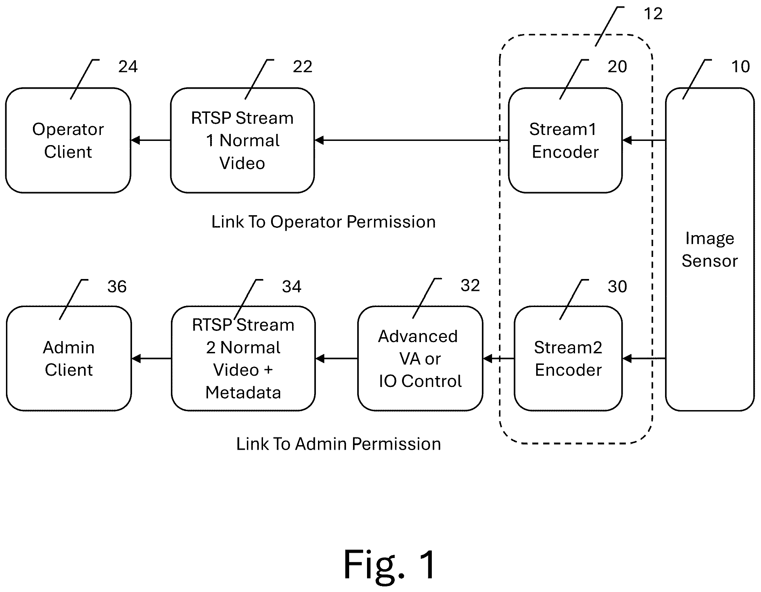

Figure 1 shows an illustrative system. An image sensor 10 may be any suitable camera or other image capture system, including any suitable footprint and/or capability, including bullet, dome, pan/tilt/zoom, internet protocol (IP), wireless, night vision, thermal, floodlight, etc. and may include those with or without 4K or high definition (HD) capabilities. The illustrative system takes the output of the image sensor and provides a multi-stream output. The multiple streams can be generated in a master node 12, which includes a processor or controller as noted above and any associated circuitry, including for example digital signal processing (DSP) chip, and memory storing instructions for performing a method of encoding a plurality of streams.

The master node 12 defines a first stream encoder 20 generates an output which links to an operator permission. That is, the first stream is tailored to the preferences and/or authorization for access of an operator client 24. The output is thus a real time streaming protocol (RTSP) designated as stream 1, here, normal video, which in this instance is generated to allow viewing by the operator client, but without access, for example and without limitation, top video metadata. Spatial or temporal limitations can be applied as well to the video feed, optionally, to prevent access to sensitive portions of the feed. A dedicated chip or other hardware, microcontroller or the like, may be used as the stream 1 encoder 20, or the operational capability of the processor or controller may be partitioned to define the stream 1 encoder 20.

The master node 12 also defines a second stream encoder 30, and still more stream encoders may be provided as desired, up to any number, though in many instances the number of encoders may be less than 10 while other installations may allow tens to hundreds of encoders. The second stream is directed to an administrator client 36 and thus subject to the administrators permissions and/or preferences. Here, advanced video analysis (VA) and/or input/output (IO) control, as indicated at 32, can be provided to the administrator client 36. The result is a second RTSP stream, this time including both video and metadata resulting from the video analysis at 32. The output is generated and provided to the administrator client 36.

The operator client 24 is not allowed to view or access the administrator client 36's feed and/or the metadata. That is, the two stream encoders 20, 30 operate on the same underlying sensed images and/or data, but the users 24 and 36 are not allowed to overlap. For efficiency, it may be determined that some aspects of the two feeds can overlap, optionally, for example any data cleanup, video feed filtering, lighting modifications that are suitable for use by the operator client 24 in the stream 1 encoder 20 may be feed as well to other encoders such as the stream 2 encoder 30.

The encoders 20, 30 are each configured to receive and implement preferences input by their respective users 24, 36, as limited by the permissions to each.

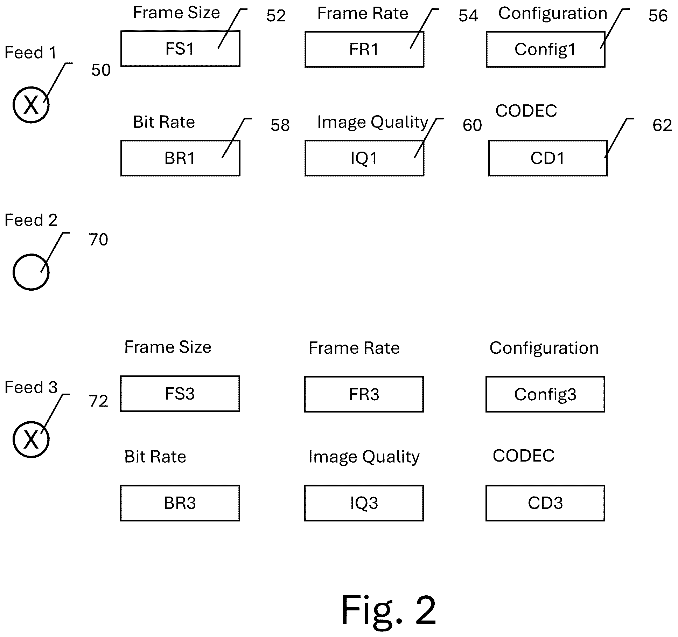

Figure 2 shows illustrative controls for the streams. Each feed can be specifically enabled or disabled, separately from the others, as indicated at 50, 70, 72. Feed 1 50 and Feed 3 72 are each enabled as indicated by the "X", while feed 2 is not enabled. Thu configurable options for Feed 2 70 are not shown. In this example, configurable parameters for each feed 50, 70, 72 include, without limitation, the frame size 52, frame rate 54, configuration 56, bit rate 58, image quality 60, and coder/decoder (CODEC) 62. Not all of these parameters may be configurable with each feed. In some examples, one or more parameters of one feed may be limited by other feeds, optionally, as for example in Figure 1, the lower permission level stream (Stream 1) may only be allowed options for frame rate or image quality that do not exceed those of the higher permission level stream (Stream 2), though this linking is optional. In other examples, the two streams are treated fully independent of one another. The options shown may allow data entry, or may be drop-down lists with preset options.

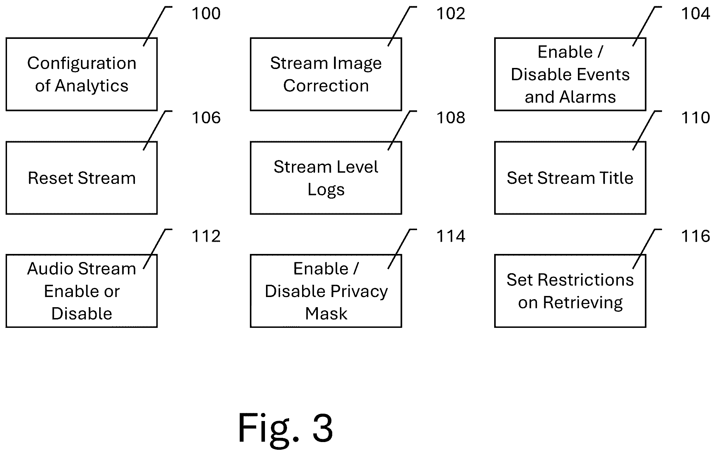

Figure 3 shows an illustrative set of parameters and/or options that can be selected or manipulated for or by a user. At 100, the analytics in the system can be configured, such as setting sensitivity for motion detection, selecting cluster definition for crowd counting algorithms, etc. Analytics can be enabled and/or disabled as well, to allow for voice capture, word recognition, letter or other image capture (license place reader for example), as well as detection and/or identification of individuals, analysis of items carried by individuals, determination of gait, speed, and other traits of persons or vehicles, etc.

At 102, stream image correction settings, including adjustments to correct focus and/or lighting can be modified. At 104, event and alarm detection can be enabled and/or disabled. At 106, the stream can be reset to default values. Stream level logging capabilities can be modified at 108. The stream may be given a title at 110. At 112, stream audio can be enabled and/or disabled; optionally, stream audio may be analyzed as well to include voice, word or language recognition, or to identify other sounds of note (gunshots for example). At 114 an option to enable or disable privacy masks is provided, and at 116, restrictions on retrieval may be set.

The options in Figure 3 may be offered to users based on user-specific permissions or credentials, and/or based on user type or class. For example, using the example of Figure 1, the operator client 24 may only have access to a selected subset of the options in Figure 3, such as that at 102, 106, 110 and/or 112, while options in the other blocks are pre-selected for based on the operator client 24 credentials or permissions. The administrator client 36, on the other hand, may have access to or free reign with all of the options shown in Figure 3.

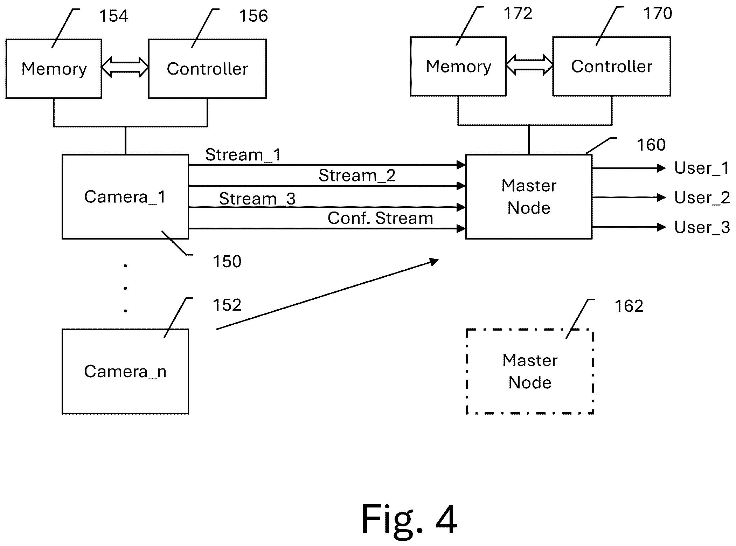

Figure 4 illustrates use of a master node in a video system. The system may have a plurality of cameras 150, 152. A particular camera 150 may be configured with internal circuityr and analysis allowing it to generate a plurality of streams (streams 1, 2, 3) as well as a full data stream (Conf. Stream) which can be stored for repository purposes, where streams 1, 2 and 3 are configured and/or limited for use by particular users. Here, the master node 160 simply routes the streams it receives to the appropriate users (Users 1, 2, 3, as shown). The master node 160 may be coupled to more than one camera if desired, or a separate master node 162 may be provided for each camera 152. Since the camera 150 is performing the video analysis and other actions needed to define each stream, the camera 150 includes a memory and controller 156 suitable for these functions. Likewise, the master node 160 includes a memory 172 and controller 170 for routing the particular streams. The streams may be tailored to particular users, or may be generated according to a preset collection of parameters, optionally.

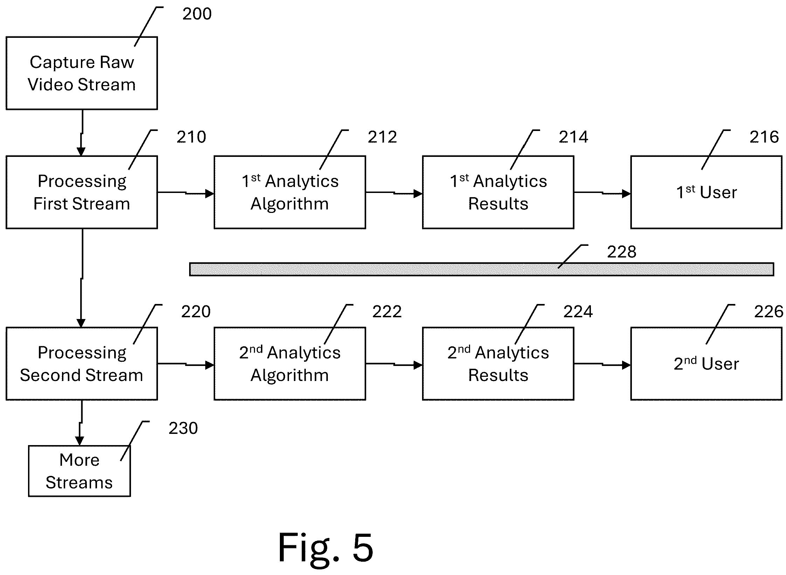

Figure 5 shows a method in block form. The method may be described as a method for monitoring a Field of View (FOV) captured by a video camera. The method includes, as indicated at 200, the video camera capturing a raw video stream of the Field of View (FOV) of the video camera.

Next, the method includes, as indicated at 210, processing the raw video stream to produce a first processed video stream, including applying a first video analytics algorithm 212 resulting in the first processed video stream having first video analytics algorithm results 214. Processing at 212 may include, for example, any one or more of a facial recognition video analytics algorithm, an asset movement video analytics algorithm, a people count video analytics algorithm, a crowd detection video analytics algorithm, a loitering detection video analytics algorithm, an intrusion detection video analytics algorithm, a queue length video analytics algorithm, an unidentified object detection video analytics algorithm, an occupancy detection video analytics algorithm, a vehicle detection video analytics algorithm, a vehicle count video analytics algorithm, a license plate reader video analytics algorithm, a bar code or quick response (QR) code reader algorithm, and/or any other visible identifier analytics algorithm adapted for any suitable context (bar code, quick response (QR) code, aircraft tail code reading, rail car identifiers, prisoner identification numbers/uniforms, etc.). The analytics results provided to a first user, as indicated at 216.

Next, the method includes, as indicated at 220, processing the raw video stream to produce a second processed video stream, including applying a second video analytics algorithm 222 resulting in the second processed video stream having second video analytics algorithm results 224. Processing at 222 may include, for example, any one or more of a facial recognition video analytics algorithm, an asset movement video analytics algorithm, a people count video analytics algorithm, a crowd detection video analytics algorithm, a loitering detection video analytics algorithm, an intrusion detection video analytics algorithm, a queue length video analytics algorithm, an unidentified object detection video analytics algorithm, an occupancy detection video analytics algorithm, a vehicle detection video analytics algorithm, a vehicle count video analytics algorithm, a license plate reader video analytics algorithm, a bar code or quick response (QR) code reader algorithm, and/or any other visible identifier analytics algorithm adapted for any suitable context (bar code, quick response (QR) code, aircraft tail code reading, rail car identifiers, prisoner identification numbers/uniforms, etc.). The analytics results provided to a second user, as indicated at 226.

As indicated by the partition at 228, the method may include granting the first user access rights to the first processed video stream but not to the second processed video stream, and granting the second user access rights to the second processed video stream but not to the first processed video stream.

At 216, an example method includes allowing the first user to display the first processed video stream on a first user display in accordance with the first user access rights granted to the first user, while preventing the first user from displaying the second processed video stream. At 226, an example method includes allowing the second user to display the second processed video stream on a second user display in accordance with the second user access rights granted to the second user, while preventing the second user from displaying the first processed video stream. The user rights may be predefined, and may be specific to the particular user, and/or may be defined by the class or category of the user within an overall system. Both user category or class and user preferences can be respected and implemented in a single method, though each may limit the other.

More streams may be provided as indicated at 230. Thus, for example, the method may include processing the raw video stream to produce a third processed video stream, including applying the first video analytics algorithm and the second video analytics algorithm, resulting in a third processed video stream that incudes first video analytics algorithm results and second video analytics results, if desired. Some examples also include granting a third user access rights to the third processed video stream; and allowing the third user to display the third processed video stream on a third user display in accordance with the third user access rights granted to the third user. In an illustrative example, this third stream and third user may have superior rights to the first and second users, such as administrator or supervisory rights. In some examples, encryption can be used for one or more of the raw and/or processed video streams. In an example, the third processed video stream is encrypted while the first processed video stream and the second processed video stream are not encrypted.

Example may facilitate the use of code parameter settings, either based on user preference or user category/class. In an example, the first processed video stream is encoded with a first set of codec parameter values, and the second processed video stream is encoded with a second set of codec parameter values, wherein the second set of codec parameter values is not identical to the first set of codec parameter values. In an example, the first set of codec parameter values includes a first Frame Per Second (FPS) parameter value, a first Bitrate parameter value and a first Resolution parameter value, and the second set of codec parameter values include a second Frame Per Second (FPS) parameter value, a second Bitrate parameter value and a second Resolution parameter value. Similarly, second and/or more sets of codec parameter values using any of these value categories may be defined for the second and/or third streams and/or users.

In some examples, metadata accompanies the streams. In an example, the first processed video stream includes first metadata, wherein at least part of the first video analytics algorithm results is expressed in the first metadata. In another example, whether the same as the preceding example or different, the second processed video stream includes second metadata, wherein at least part of the second video analytics algorithm results is expressed in the second metadata.

In some examples, the video camera is configured to process the raw video stream to produce the first processed video stream, including applying the first video analytics algorithm resulting in the first processed video stream having first video analytics algorithm results; and the video camera may also be configured to process the raw video stream to produce the second processed video stream, including applying the second video analytics algorithm resulting in the second processed video stream having second video analytics algorithm results, wherein the second video analytics algorithm is different from the first video analytics algorithm. Optionally, rather than the camera itself, a separate master node may perform the analytics and distribution thereof, with the camera obtaining and forwarding raw video stream data to the master node in an encrypted or unencrypted state.

In some examples the camera includes a processor or controller and associated memory. In an example, the video camera is configured to store the first user access rights and the second user access rights, and to allow the first user access to the first processed video stream in accordance with the first user access rights granted to the first user, while preventing access of the first user to the second processed video stream, and to allow the second user access to the second processed video stream in accordance with the second user access rights granted to the second user, while preventing access of the second user to the first processed video stream.

In another example, the system may include a remote device, such as a server, a cloud device, a mobile device, a central controller, etc., which is operatively coupled to the video camera is configured to store the first user access rights and the second user access rights, and to: allow the first user access to the first processed video stream in accordance with the first user access rights granted to the first user, while preventing access of the first user to the second processed video stream; and allow the second user access to the second processed video stream in accordance with the second user access rights granted to the second user, while preventing access of the second user to the first processed video stream.

Optionally, in an example, one or more of the first video analytics algorithm results and the second video analytics algorithm results encode one or more user alerts for alerting to a detected condition or event. Such user alerts can take several forms. One example user alert is a boundary box that is superimposed on the detected condition or event detected in the respective processed video stream. One example user alert is an audible alert and/or a text-based alert. The user alerts, in some examples, are customized to a respective user.

The displays used by any of the users may take several forms as well. In an example, the user display is a mobile device of one of the users. In another example, the user display is an operator console in which at least one of the users is currently logged in.

The method as shown in Figure 5 can be implemented in a video camera, in an illustrative example. An example takes the form of a video camera capturing 200 a raw video stream of a Field of View (FOV) of the video camera, the video camera comprising: a memory for storing first user access rights of a first user and second user access rights of a second user; a controller operatively coupled to the memory, the controller configured to: process 210 the raw video stream to produce a first processed video stream, including applying a first video analytics algorithm 212 resulting in the first processed video stream having first video analytics algorithm results 214. The controller is also configured to process 220 the raw video stream to produce a second processed video stream, including applying a second video analytics algorithm 222 resulting in the second processed video stream having second video analytics algorithm results 224, wherein the second video analytics algorithm is different from the first video analytics algorithm. The controller also allows the first user 216 to access the first processed video stream based on the first user access rights of the first user, while preventing the first user from accessing the second processed video stream. The controller further allows the second user 226 access to the second processed video stream based on the second user access rights of the second user, while preventing the second user from accessing the first processed video stream.

Optionally, the controller facilitates more streams as indicated at 230. Thus the memory may store third user access rights of a third user, and the controller is configured to: process the raw video stream to produce a third processed video stream, including applying the first video analytics algorithm and the second video analytics algorithm, resulting in a third processed video stream that incudes first video analytics algorithm results and second video analytics results; and allow the third user to access the third processed video stream based on the third user access rights of the third user.

Encryption of one or more such streams is provided in an example. In one example, the controller is configured to encrypt the third processed video stream, while not encrypting the first processed video stream and the second processed video stream. Other examples may encrypt different or more video streams, or none at all.

Code parameters can also be defined and/or specialized according to user category or class, or according to user preferences, or both. In an example, the first processed video stream is encoded with a first set of codec parameter values, and the second processed video stream is encoded with a second set of codec parameter values, wherein the second set of codec parameter values is not identical to the first set of codec parameter values.

The method can also be embodied in a non-transitory computer readable medium storing instructions that when executed by one or more processors of a video camera cause the one or more processors to: process a video stream captured 200 by the video camera to produce a first processed video stream 210, including applying a first video analytics algorithm 212 resulting in the first processed video stream having first video analytics algorithm results 214. The instructions may also cause the one or more processors to process the video stream to produce a second processed video stream 220, including applying a second video analytics algorithm 222 resulting in the second processed video stream having second video analytics algorithm results 224, wherein the second video analytics algorithm is different from the first video analytics algorithm. The instructions also cause the processor to allow a first user 216 access the first processed video stream, while preventing the first user from accessing the second processed video stream, and allow a second user 226 access to the second processed video stream, while preventing the second user from accessing the first processed video stream.

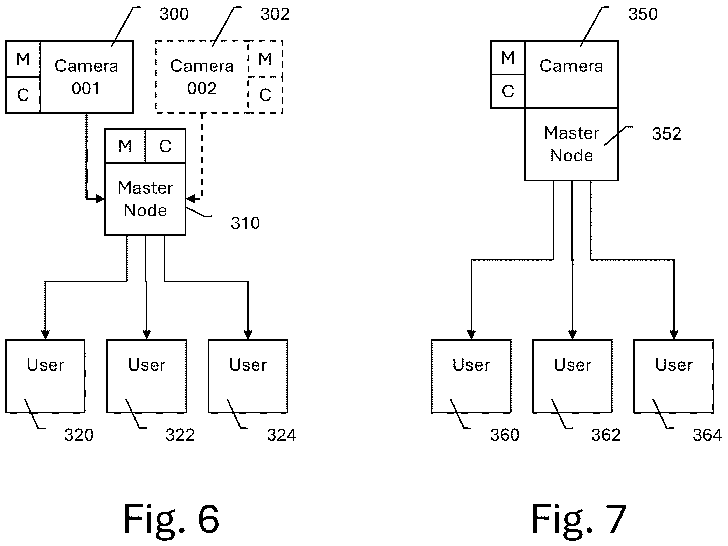

Figures 6-7 show illustrative system configurations. In Figure 6, one or more cameras 300, 302 are linked operably to a master node 310. Here, the cameras capture images and send a raw encrypted or unencrypted raw video stream to the master node 310. The master node 310 in turn operates as shown in Figure 5 to generate separate data streams for each of a plurality of users 320, 322, 324, while keeping those streams and user accesses separate for at least some of the users. Each camera 300, 302 and the master node 310 may include a controller or processor (C) and a memory (M) for storing operational instructions as well as user category/class and/or preferences, as needed for a given implementation. That is, in Figure 6, the cameras 300, 302 may not need the memory to store user preferences, but should include sufficient capability to store instructions for obtaining the desired raw feed, which can be performed in accordance with user preferences and/or categories/class. The master node 310 at least would store data related to the users 320, 322, 324, as well as the analytics algorithms to be applied to the raw data prior to sending video data and/or analytic results to the users 320, 322, 324. The master node 310 may service one camera 300, or may service plural cameras 300, 302.

Figure 6 shows a somewhat different configuration. Here, the master node 352 is integrated into the camera 350. The camera 350 captures images and includes one or more processors or controllers (C) and memory to support both camera operation 350 and master node 352 operation. The master node 352, which is now part of the camera, operates as shown in Figure 5 to generate separate data streams for each of a plurality of users 360, 362, 364. The streams and user accesses are kept separate for at least some of the users 360, 362, 364. The camera stores data related to the users 360, 362, 364, such as user category/class and preferences, as well as the analytics algorithms to be applied to the raw data prior to sending video data and/or analytic results to the users 360, 362, 364. In this case, each master node 352 is dedicated to and physically packaged with a particular camera 350.

Each of these non-limiting examples can stand on its own, or can be combined in various permutations or combinations with one or more of the other examples.

The above detailed description includes references to the accompanying drawings, which form a part of the detailed description. The drawings show, by way of illustration, specific embodiments. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." Moreover, in the claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic or optical disks, magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description.

The Abstract is provided to comply with 37 C.F.R. §1.72(b), to allow the reader to quickly ascertain the nature of the technical disclosure. It is submitted with the understanding that it will not be used to interpret or limit the scope or meaning of the claims.

Also, in the above Detailed Description, various features may be grouped together to streamline the disclosure. This should not be interpreted as intending that an unclaimed disclosed feature is essential to any claim. Rather, innovative subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the protection should be determined with reference to the appended claims, along with the full scope of equivalents to which such claims are entitled.

## Claims

1. A method for monitoring a Field of View (FOV) captured by a video camera, the method comprising:
the video camera capturing a raw video stream of the Field of View (FOV) of the video camera;
processing the raw video stream to produce a first processed video stream, including applying a first video analytics algorithm resulting in the first processed video stream having first video analytics algorithm results;
processing the raw video stream to produce a second processed video stream, including applying a second video analytics algorithm resulting in the second processed video stream having second video analytics algorithm results, wherein the second video analytics algorithm is different from the first video analytics algorithm;
granting a first user access rights to the first processed video stream but not to the second processed video stream;
granting a second user access rights to the second processed video stream but not to the first processed video stream;
allowing the first user to display the first processed video stream on a first user display in accordance with the first user access rights granted to the first user, while preventing the first user from displaying the second processed video stream; and
allowing the second user to display the second processed video stream on a second user display in accordance with the second user access rights granted to the second user, while preventing the second user from displaying the first processed video stream.

2. The method of claim 1, comprising:
processing the raw video stream to produce a third processed video stream, including applying the first video analytics algorithm and the second video analytics algorithm, resulting in a third processed video stream that incudes first video analytics algorithm results and second video analytics results;
granting a third user access rights to the third processed video stream; and
allowing the third user to display the third processed video stream on a third user display in accordance with the third user access rights granted to the third user;
further optionally wherein the third processed video stream is encrypted while the first processed video stream and the second processed video stream are not encrypted.

3. The method of any preceding claim, wherein the first processed video stream is encoded with a first set of codec parameter values, and the second processed video stream is encoded with a second set of codec parameter values, wherein the second set of codec parameter values is not identical to the first set of codec parameter values;
further, optionally, wherein the first set of codec parameter values includes a first Frame Per Second (FPS) parameter value, a first Bitrate parameter value and a first Resolution parameter value, and the second set of codec parameter values include a second Frame Per Second (FPS) parameter value, a second Bitrate parameter value and a second Resolution parameter value.

4. The method of any preceding claim, wherein:
the first processed video stream includes first metadata, wherein at least part of the first video analytics algorithm results is expressed in the first metadata; and
the second processed video stream includes second metadata, wherein at least part of the second video analytics algorithm results is expressed in the second metadata.

5. The method of any preceding claim, wherein:
the first video analytics algorithm includes one of: a facial recognition video analytics algorithm; an asset movement video analytics algorithm; a people count video analytics algorithm; a crowd detection video analytics algorithm; a loitering detection video analytics algorithm; an intrusion detection video analytics algorithm; a queue length video analytics algorithm; an unidentified object detection video analytics algorithm; an occupancy detection video analytics algorithm; a vehicle detection video analytics algorithm; a vehicle count video analytics algorithm; a license plate reader video analytics algorithm; and
the second video analytics algorithm includes one of: a facial recognition video analytics algorithm; an asset movement video analytics algorithm; a people count video analytics algorithm; a crowd detection video analytics algorithm; a loitering detection video analytics algorithm; an intrusion detection video analytics algorithm; a queue length video analytics algorithm; an unidentified object detection video analytics algorithm; an occupancy detection video analytics algorithm; a vehicle detection video analytics algorithm; a vehicle count video analytics algorithm; and a license plate reader video analytics algorithm.

6. The method of any preceding claim, wherein the video camera is configured to:
process the raw video stream to produce the first processed video stream, including applying the first video analytics algorithm resulting in the first processed video stream having first video analytics algorithm results; and
process the raw video stream to produce the second processed video stream, including applying the second video analytics algorithm resulting in the second processed video stream having second video analytics algorithm results, wherein the second video analytics algorithm is different from the first video analytics algorithm.

7. The method of any preceding claim, wherein the video camera is configured to store the first user access rights and the second user access rights, and to:
allow the first user access to the first processed video stream in accordance with the first user access rights granted to the first user, while preventing access of the first user to the second processed video stream; and
allow the second user access to the second processed video stream in accordance with the second user access rights granted to the second user, while preventing access of the second user to the first processed video stream.

8. The method of any preceding claim, wherein a remote device operatively coupled to the video camera is configured to store the first user access rights and the second user access rights, and to:
allow the first user access to the first processed video stream in accordance with the first user access rights granted to the first user, while preventing access of the first user to the second processed video stream; and
allow the second user access to the second processed video stream in accordance with the second user access rights granted to the second user, while preventing access of the second user to the first processed video stream.

9. The method of any preceding claim, wherein one or more of the first video analytics algorithm results and the second video analytics algorithm results encode one or more user alerts for alerting to a detected condition or event.

10. The method of claim 9, wherein at least one of the following is included:
one or more of the user alerts include a boundary box that is superimposed on the detected condition or event detected in the respective processed video stream;
one or more of the user alerts include an audible alert and/or a text-based alert; and/or one or more of the user alerts are customized to a respective user.

11. The method of any preceding claim, wherein the first user display is part of one of a mobile device of the first user and an operator console in which the first user is currently logged in.

12. A video camera configured for capturing a raw video stream of a Field of View (FOV) of the video camera, the video camera comprising:
an image capture device having the FOV and configured to capture the raw video stream;
a memory for storing first user access rights of a first user and second user access rights of a second user;
a controller operatively coupled to the memory, the controller configured to:
process the raw video stream to produce a first processed video stream, including applying a first video analytics algorithm resulting in the first processed video stream having first video analytics algorithm results;
process the raw video stream to produce a second processed video stream, including applying a second video analytics algorithm resulting in the second processed video stream having second video analytics algorithm results, wherein the second video analytics algorithm is different from the first video analytics algorithm;
allow the first user to access the first processed video stream based on the first user access rights of the first user, while preventing the first user from accessing the second processed video stream; and
allow the second user access to the second processed video stream based on the second user access rights of the second user, while preventing the second user from accessing the first processed video stream.

13. The video camera of claim 12, wherein the memory stores third user access rights of a third user, and the controller is configured to:
process the raw video stream to produce a third processed video stream, including applying the first video analytics algorithm and the second video analytics algorithm, resulting in a third processed video stream that incudes first video analytics algorithm results and second video analytics results; and
allow the third user to access the third processed video stream based on the third user access rights of the third user.

14. A non-transitory computer readable medium storing instructions that when executed by one or more processors of a video camera cause the one or more processors to:
process a video stream captured by the video camera to produce a first processed video stream, including applying a first video analytics algorithm resulting in the first processed video stream having first video analytics algorithm results;
process the video stream to produce a second processed video stream, including applying a second video analytics algorithm resulting in the second processed video stream having second video analytics algorithm results, wherein the second video analytics algorithm is different from the first video analytics algorithm;
allow a first user access the first processed video stream, while preventing the first user from accessing the second processed video stream; and
allow a second user access to the second processed video stream, while preventing the second user from accessing the first processed video stream.
